Europäisches Patentamt

European Patent Office

Office européen des brevets

(11) Publication number: **0 427 558 A2**

# EUROPEAN PATENT APPLICATION

(21) Application number: 90312273.7

(51) Int. Cl.5: **G06F 9/46**

(22) Date of filing: 09.11.90

(30) Priority: 10.11.89 JP 292876/89

(43) Date of publication of application:
15.05.91 Bulletin 91/20

(84) Designated Contracting States:
DE FR GB IT NL

(71) Applicant: MITA INDUSTRIAL CO. LTD.
2-28, 1-chome, Tamatsukuri Chuo-ku
Osaka-shi Osaka 540(JP)

(72) Inventor: Shibata, Tetsuya
29-10, Yawata Nagatani
Yawata-shi, Kyoto-fu 614(JP)

(74) Representative: Jones, Colin et al
W.P. THOMPSON & CO. Coopers Building
Church Street
Liverpool L1 3AB(GB)

(54) Task switching system.

(57) A memory in a task switching system includes, for example, five memory banks (0 to 4) and one common area. Physical address areas (2000H to 13FFFH) different from each other are respectively assigned to the memory banks (0 to 4), and common apparent addresses (2000H to 7FFFH) are assigned to each of the memory banks (0 to 4). In addition, the common area stores a task control block including start address information, stack pointer information, queue information, bank information and the like. At the time of task switching, any one of the five memory banks (0 to 4) is used as a memory bank for reading on the basis of the bank information in the task control block and a task is read out on the basis of the apparent addresses (2000H to 7FFFH) assigned to the memory bank.

*FIG. 1*

EP 0 427 558 A2

# TASK SWITCHING SYSTEM

The present invention relates to task management in an operating system of a computer, and more particularly, to an improvement of a multitask switching system.

A task is a minimum unit of a job executed by a computer, and a computer program is constituted by one or more tasks processed in parallel or sequentially.

In order to cause a computer to execute a program, it is necessary to allocate the order of processing, processing time and the like for each task, that is, schedule tasks and switch and tasks on the basis of the scheduling by an operating system.

For example, a conventional real time multitask operating system for a 8-bit microprocessor has scheduled tasks and switched the tasks by managing a starting address, a stack pointer, priority, queue information and the like of each of the tasks.

A task switching system in the conventional real time multitask operating system for a 8-bit microprocessor has not supported only an address space of a maximum of 64k bytes.

In recent years, however, a 8-bit microcomputer for supporting an address space of IM byte using a bank switching system for switching memory banks has appeared. In the case of this microcomputer, tasks cannot be switched in the conventional task switching system. Accordingly, a task switching system which is adaptable to a memory bank switching system has been desired.

An object of the present invention is to provide a task switching system which is adaptable to a computer employing a memory bank switching system.

In the present invention, task switching data includes memory bank information for specifying a memory bank in which a task is stored. Accordingly, a memory bank in which a task is stored can be specified, and switching of memory banks can be supported even when a computer employs a memory bank switching system.

In accordance with a first aspect of the present invention, there is provided a task switching method for switching a plurality of tasks by task switching data, characterized by:

preparing a plurality of memory banks and storing each of the tasks in any one of the plurality of memory banks;

including in the task switching data memory bank information for specifying a memory bank in which a task is stored; and

switching tasks on the basis of the task switching data including the memory bank information.

In accordance with a second aspect of the present invention, there is provided a task switching method for a multitask operating system, characterized by:

dividing a memory area for storing tasks into a plurality of banks and one common area;

physically assigning address areas different from each other to the plurality of banks, respectively;

assigning common apparent addresses to each of the plurality of banks;

storing tasks in the plurality of banks, respectively;

storing in the common area task switching data including at least bank information for specifying a bank; and

specifying one bank out of the plurality of banks by the bank information stored in the common area to switch the tasks by the apparent addresses assigned to the specified bank at the time of task switching.

In accordance with a third aspect of the present invention, there is provided a task switching system for a multitask operating system, characterized by:

a plurality of memory banks respectively comprising physical address areas different from each other and each comprising common apparent addresses, and respectively storing required tasks;

one common memory storing task switching data, the task switching data including at least bank information indicating which of said plurality memory banks stores a task; and

task switching means for switching any one of the plurality of memory banks into a memory bank for reading on the basis of the bank information stored in the common memory.

By way of example only, a specific embodiment of the present invention will now be described, with reference to the accompanying drawings, in which:-

Fig. 1 is a memory map of a memory having a capacity of 128K bytes in which an operation program of a 8-bit microprocessor is stored;

Fig. 2 is an illustration showing an example of a task control block which is stored in a common area of the above described memory map; and

Fig. 3 is a flow chart showing an example of task switching processing performed by a microprocessor.

Description is now made by taking as an example a case where one embodiment of the present invention is applied to a real time multitask operating system for a 8-bit microprocessor.

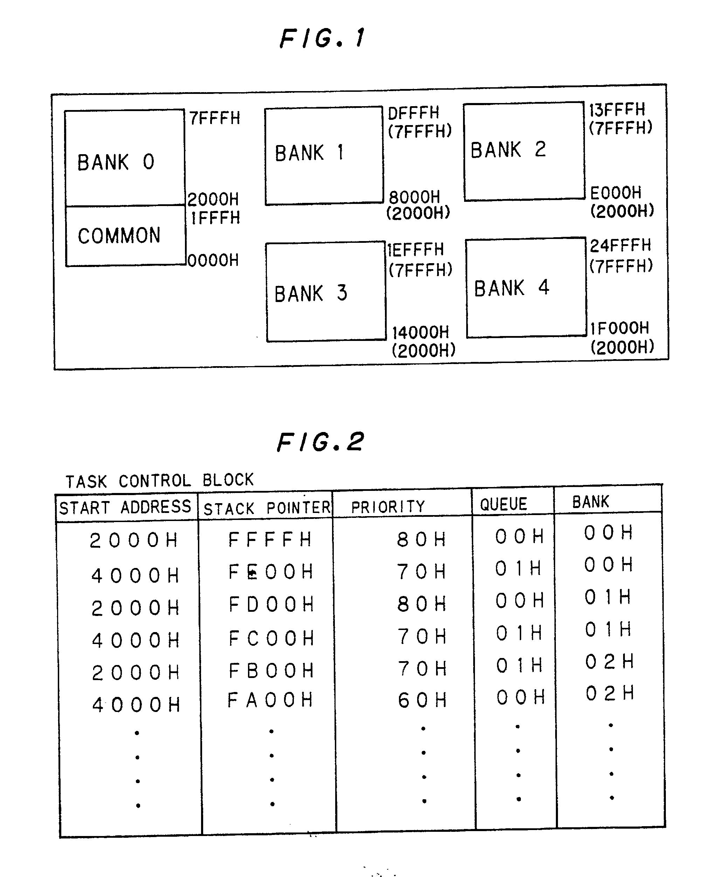

Fig. 1 is a memory map of a memory having a capacity of 128K bytes in which an operation program of a 8-bit microprocessor (not shown) is stored. This memory comprises a common area having a capacity of 8K bytes and five banks 0 to 4 each having a capacity of 24K bytes.

Address ares "0000H" to "1FFFH" are assigned to the common area ("H" given to the end of an address is a sign representing hexadecimal). A subroutine for an operating system including a task control block as described later is stored in this common area.

Address areas "2000H" to "7FFFH" are assigned to the bank 0, address areas "8000H" to "DFFFH" are assigned to the bank 1, address areas "E000H" to "13FFFH" are assigned to the bank 2, address areas "14000H" to "1EFFFH" are assigned to the bank 3, and address areas "1FOOOH" to "24FFFH" are assigned to the bank 4. Predetermined tasks are respectively stored in the banks 0 to 4.

Furthermore, apparent addresses "2000H" to "7FFFH" are assigned to each of the banks 1 to 4 in addition to the above described addresses physically assigned. Accordingly, if the apparent address, for example, the address "2000H" is designated, the respective first addresses in the five banks 0 to 4 are designated.

A task switching system according to the present embodiment is so adapted that a plurality of banks have common apparent addresses to decrease the number of addresses and a bank can be specified by bank information.

Fig. 2 is an illustration showing a concrete example of the contents of a task control block stored in a common area. The task control block comprises as task switching data bank information in addition to information conventionally used of a task such as start address information, stack pointer information, priority information and queue information. The stack pointer information is one designating an address in a work area. Task data so far executed is stored in a designated work area. The priority information is one representing the priority of banks. In addition, the queue information is one representing the wait state of a task. Furthermore, the bank information is one indicating which bank stores a task.

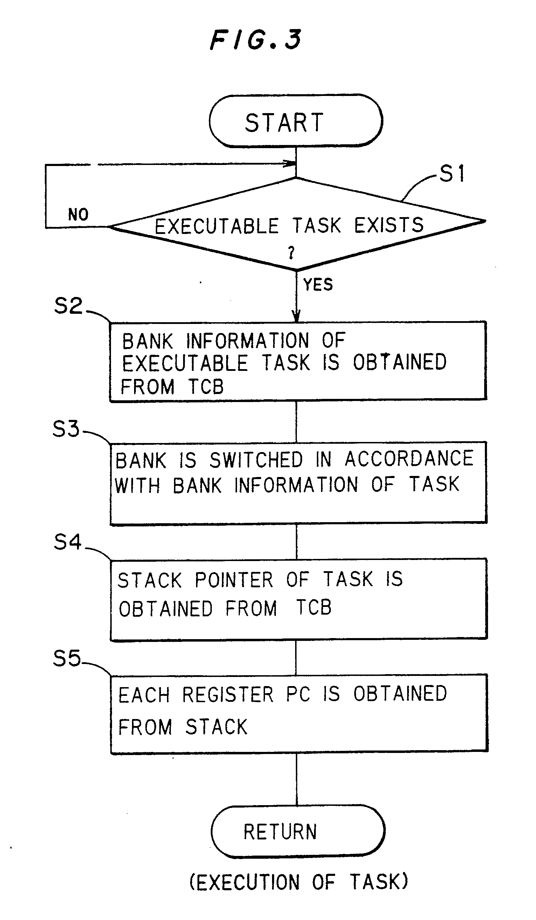

Fig. 3 is a flow chart showing the order of processing in the task switching system according to the present invention. Description is made along the flow of Fig. 3. A microprocessor (not shown) judges on the basis of queue information and priority information in a task control block whether or not an executable task exists (step S1. If an executable task exists, bank information corresponding to queue information of the executable task which is stored in the task control block is read out to confirm a bank in which the task is stored (step S2). The bank is then switched in accordance with the bank information (step S3).

Furthermore, stack pointer information of the executable task is obtained from the task control block (step S4), and data in a work area is read out, to obtain register information and program counter information (step S5). The executable task is then processed.

According to the embodiment of the present invention, there can be provided a new task switching system which is adaptable to a computer employing a bank switching system.

Particularly in a low-cost 8-bit microcomputer, there can be provided a task switching system which is adaptable to a case where the microcomputer supports an address space having a large capacity using the bank switching system. Accordingly, a large-scale system using a real time multitask operating system can be constructed by the low-cost 8-bit microcomputer.

Although the present invention has been described and illustrated in detail, it is clearly understood that the same is by way of illustration and example only and is not to be taken by way of limitation.

## Claims

1. A task switching method for switching a plurality of tasks by task switching data, characterized by:
preparing a plurality of memory banks and storing each of the tasks in any one of the plurality of memory banks;
including in the task switching data memory bank information for specifying a memory bank in which a task is stored; and
switching tasks on the basis of the task switching data including the memory bank information.

2. A task switching method for a multitask operating system, characterized by:
dividing a memory area for storing tasks into a plurality of banks and one common area;
physically assigning address areas different from each other to the plurality of banks, respectively;
assigning common apparent addresses to each of the plurality of banks;
storing tasks in the plurality of banks, respectively;
storing in the common area task switching data including at least bank information for specifying a bank; and
specifying one bank out of the plurality of banks by the bank information stored in the common area to switch the tasks by the apparent addresses assigned to the specified bank at the time of.task switching.

3. A task switching system for a multitask operating system, characterized by:
a plurality of memory banks respectively comprising physical address areas different from each other and each comprising common apparent addresses, and respectively storing required tasks;

one common memory storing task switching data, the task switching data including at least bank information indicating which of said plurality memory banks stores a task; and

task switching means for switching any one of the plurality of memory banks into a memory bank for reading on the basis of the bank information stored in the core on memory.

4. A task switching system according to claim 3, wherein

the task switching data includes queue information representing the wait state of a task, start address information of a task and stack pointer information for designating an address of the last one of tasks so far executed.

5. A task switching system according to claim 3, which comprises a task switching system for a real time multitask operatin9 system for a 8-bit microprocessor.

## FIG. 1

| | | |
|---|---|---|
| BANK 0 — 7FFFH<br>— 2000H<br>COMMON — 1FFFH<br>— 0000H | BANK 1 — DFFFH (7FFFH)<br>— 8000H (2000H) | BANK 2 — 13FFFH (7FFFH)<br>— E000H (2000H) |
| | BANK 3 — 1EFFFH (7FFFH)<br>— 14000H (2000H) | BANK 4 — 24FFFH (7FFFH)<br>— 1F000H (2000H) |

## FIG. 2

TASK CONTROL BLOCK

| START ADDRESS | STACK POINTER | PRIORITY | QUEUE | BANK |
|---|---|---|---|---|
| 2000H | FFFFH | 80H | 00H | 00H |
| 4000H | FE00H | 70H | 01H | 00H |
| 2000H | FD00H | 80H | 00H | 01H |
| 4000H | FC00H | 70H | 01H | 01H |
| 2000H | FB00H | 70H | 01H | 02H |
| 4000H | FA00H | 60H | 00H | 02H |
| ⋮ | ⋮ | ⋮ | ⋮ | ⋮ |

# F I G. 3

```
                    ┌──────────────┐
                    │    START     │
                    └──────┬───────┘
                           │
      ┌────────────────────┤
      │                    │                    S1
      │              ╱─────┴──────╲
   ┌──┘            ╱                ╲
   NO   EXECUTABLE TASK EXISTS
      ╲                ?             ╱
        ╲─────────┬──────────────╱
                  │ YES
                  ▼
```

S2 — BANK INFORMATION OF
     EXECUTABLE TASK IS OBTAINED
     FROM TCB

S3 — BANK IS SWITCHED IN ACCORDANCE
     WITH BANK INFORMATION OF TASK

S4 — STACK POINTER OF TASK IS
     OBTAINED FROM TCB

S5 — EACH REGISTER PC IS OBTAINED
     FROM STACK

```
                    ┌──────────────┐
                    │    RETURN    │
                    └──────────────┘
```

(EXECUTION OF TASK)